# FASCICULE DE BREVET EUROPEEN

(11) **EP 3 828 107 B1**
(45) Date de publication et mention de la délivrance du brevet: **16.02.2022**
(21) Numéro de dépôt: 20205828.5
(22) Date de dépôt: 05.11.2020
(51) Int. Cl.: B65G 43/08, B65G 47/52, B65G 47/84

(54) **INSTALLATION DE TRI D'ARTICLES TELS QUE COLIS OU PAQUETS AVEC UN SYSTÈME DE CONTRÔLE DE POSITION DES ARTICLES PAR DÉTECTION DE CONTOUR**
SORTIERANLAGE FÜR ARTIKELN WIE PAKETE MIT EINEM SYSTEM ZUM KONTROLLIEREN DER POSITION DER ARTIKELN DURCH DIE DETEKTION DER KONTUR
AN INSTALLATION FOR SORTING ARTICLES SUCH AS PARCELS OR PACKETS WITH A SYSTEM FOR MONITORING THE POSITIONING OF THE ARTICLES BY OUTLINE DETECTION

(30) Priorité: 28.11.2019 FR 1913365
(43) Date de publication de la demande: 02.06.2021
(73) Titulaire: Solystic, 92220 Bagneux (FR)
(72) Inventeur: BEAUGRAND, Wilfrid, 26000 VALENCE (FR); REBOUL, Jean-Michel, 26260 SAINT DONAT (FR)
(74) Mandataire: Prugneau, Philippe

(56) Documents cités:
- WO-A1-2015/145000
- WO-A1-2016/010766
- JP-A- H06 255 742
- JP-A- 2002 068 467

## Description

### Domaine technique

La présente invention concerne une installation de tri pour des articles comme des colis ou des paquets tels que des petits paquets postaux, comprenant un convoyeur de tri à carrousel avec des godets de transport des articles qui sont déplacés en boucle fermée suivant une certaine direction de déplacement au-dessus d'une pluralité de sorties de tri formées respectivement de réceptacles de stockage, un magasin d'alimentation en articles dans lequel des articles stockés en vrac sont sérialisés puis injectés un par un dans les godets de transport du convoyeur en déplacement par un dispositif d'injection, et une unité de contrôle/commande qui agit sur le convoyeur de tri pour vider chaque godet contenant un article au-dessus d'un réceptacle qui correspond à une adresse de distribution de l'article suivant un plan de tri maintenu en mémoire dans l'unité de contrôle/commande.

La présente invention peut s'appliquer par exemple à une installation pour le tri de colis ou paquets en plusieurs passes de tri et plus particulièrement en deux passes de tri vers un grand nombre de directions ou destinations. Le grand nombre de directions ou destinations est de l'ordre de plusieurs milliers.

Ces directions ou destinations correspondent aux différentes tournées de livraison des colis ou paquets postaux d'un pays ou d'une région dans un pays. Technique antérieure

Le tri de colis par exemple peut se faire actuellement de façon répartie sur plusieurs centres de tri à savoir par exemple un centre principal d'arrivée des colis dans un pays où est réalisé un tri acheminement et des centres de distribution dans différentes régions du pays où est réalisé un tri distribution.

Le problème des installations de tri de colis actuelles est que les colis ne sont pas vraiment triés selon un ordre permettant d'organiser une tournée de distribution ou alors il faut affiner le tri des colis manuellement.

Ces installations actuelles n'ont pas une automatisation suffisamment poussée pour réaliser un tri acheminement et distribution sur un seul site des petits paquets internationaux (PPI).

Le but de l'invention est de rendre plus efficace une installation de tri de colis ou paquets en lui permettant de trier en une ou plusieurs passes des colis et des paquets sur un grand nombre de sorties de tri et donc de directions.

Un autre but de l'invention est de d'améliorer le débit d'une telle installation de tri pour colis ou paquets et ce pour un large spectre de colis ou paquets.

Par exemple le débit visé par l'invention est de l'ordre de 11000 ou plus de colis ou paquets postaux par heure et le spectre des articles triés va d'un colis avec des dimensions en longueur, largeur et hauteur allant par exemple de 50mmx50mmx5mm jusqu'à 400mmx300mmx200mm par exemple.

Le document WO 2015/145000 décrit un exemple d'installation pour le tri d'articles selon le préambule de la revendication 1.

### Résumé de l'invention

A cet effet, l'invention a pour objet une installation pour le tri d'articles selon la revendication 1.

Un tel contrôle de positionnement des articles par détection de contour à l'aide de capteurs optoélectroniques selon l'invention, permet de réaliser une injection des articles transversalement dans les godets, à grande cadence et avec une forte fiabilité.

Cette installation peut présenter en outre les particularités suivantes :
- les capteurs sont des capteurs optoélectroniques formant un rideau vertical de détection.
- l'unité de traitement de données détermine à partir des données de contour, un point instantané d'extrémité amont, un point instantané d'extrémité aval et un point instantané de pivot de l'article et à partir de ces points instantanés calcule par extrapolation une position relative prévisible de l'article sous l'effet de son déplacement par les pousseurs à piston et à partir de cette position relative prévisible calculée détecte si l'article est dans un positionnement inadéquat.
- le système de capteurs peut comprendre en outre des capteurs disposés pour générer des données de contrôle de positionnement de l'article suivant la direction de déplacement par rapport au pousseur à piston chargé d'injecter l'article dans un godet.
- les godets du convoyeur de tri se présentent chacun avec un rebord escamotable à l'arrière, et le dispositif d'injection est agencé pour injecter latéralement chaque article sur un côté latéral du godet.
- les articles sont des colis ou des paquets postaux comme des petits paquets internationaux.

### Présentation sommaire des dessins

La figure 1 est une vue schématique d'une installation de tri selon l'invention.
La figure 2 montre des godets de transport des articles avec des réceptacles de sortie de tri.
La figure 3 montre un injecteur pour injecter des articles dans les godets de transport du convoyeur de tri.
La figure 4 illustre des capteurs optoélectroniques formant un rideau de détection du contour d'un article pénétrant dans le convoyeur à lattes.
La figure 5 illustre un contour d'un article représenté par des données d'échantillonnage.
La figure 6 est un diagramme simplifié illustrant le processus de détection de la position d'un article sur le convoyeur à lattes selon l'invention.
La figure 7 illustre un premier exemple d'un article mal positionné pour une injection dans les godets de transport du convoyeur de tri.
La figure 8 illustre un second exemple d'un article mal positionné pour une injection dans les godets de transport du convoyeur de tri.
La figure 9 illustre un troisième exemple d'un article mal positionné pour une injection dans les godets de transport du convoyeur de tri.
La figure 10 illustre un quatrième exemple d'un article mal positionné pour une injection dans les godets de transport du convoyeur de tri.

L'invention est exposée ci-après plus en détail et illustrée par les dessins qui représentent un exemple d'installation pour le tri de colis ou paquets postaux.

### Description des modes de réalisation

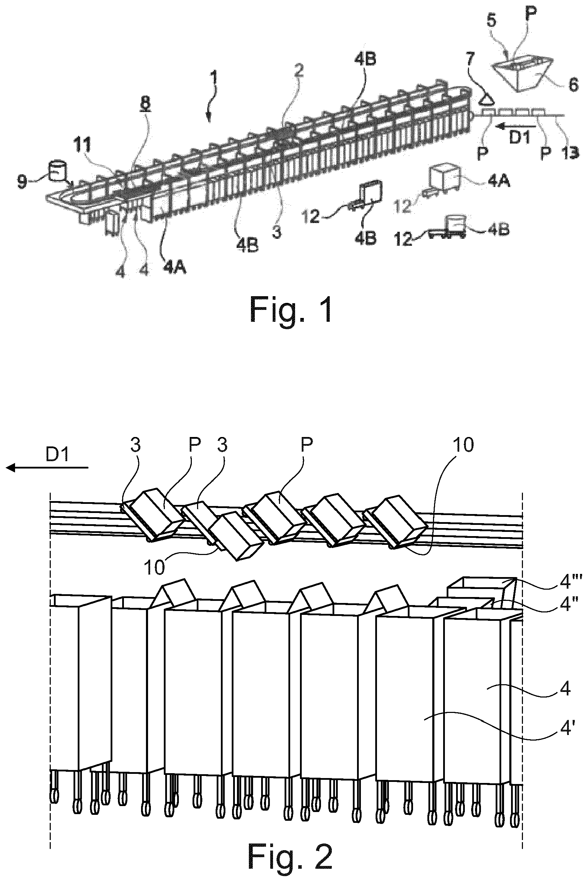

Sur la figure 1, on a illustré de façon schématique une installation de tri d'articles 1 selon l'invention pour ici par exemple trier des petits paquets internationaux dits « PPI » qui ont chacun une forme générale parallélépipédique et un poids de moins de 3kg.

L'installation de tri 1 comprend un convoyeur de tri à carrousel 2 avec des godets de transport 3 qui sont représentés très schématiquement par un rectangle sur les figures avec chacun à l'arrière un rebord escamotable plus visible sur la figure 2 qui sert à ouvrir le godet pour vider un article par exemple au-dessus d'une sortie de tri.

Ces godets de transport 3 sont déplacés en étant inclinés par rapport à l'horizontal (le rebord escamotable de chaque godet incliné étant alors en position redressée) et suivant une boucle fermée au-dessus d'une pluralité de sorties de tri formées par des réceptacles de stockage 4 ouverts sur le dessus et disposés ici sur deux brins parallèles et opposés de la boucle.

Pendant le transport d'un article dans un godet en position inclinée avec le rebord escamotable du godet qui est redressé comme indiqué ci-dessus, l'article qui est à plat dans le godet est également en position inclinée et le pied de l'article vient en appui contre le rebord redressé du godet.

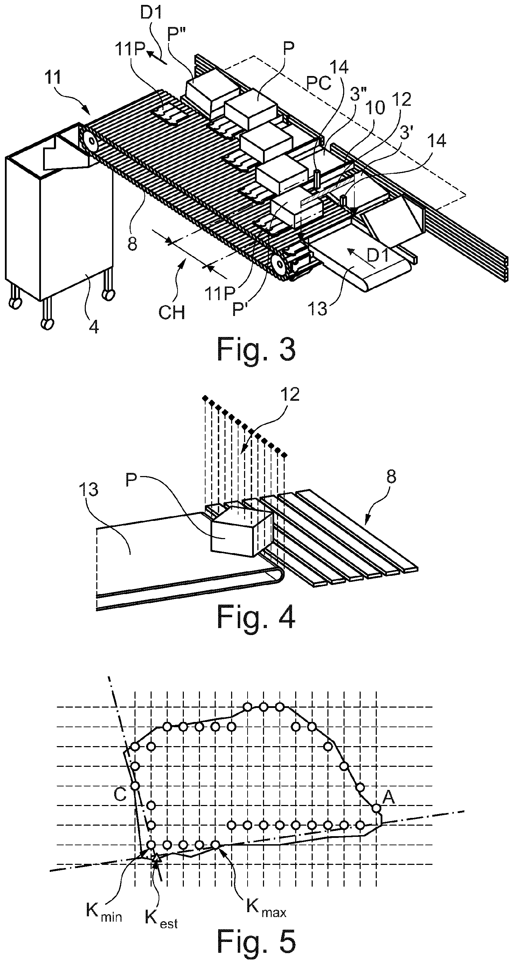

La direction de déplacement des godets est indiquée par la flèche D1 sur les figures 2 et 3.

L'installation de tri 1 comprend encore un magasin d'alimentation 5 en paquets avec une trémie 6 dans laquelle des paquets P à trier sont stockés en vrac.

En sortie de la trémie, les paquets sont sérialisés et alignés par exemple à pas constant en vue d'être injectés dans les godets de transport du convoyeur de tri.

Sur la figure 1, on a illustré très schématiquement un dispositif 7 de prise d'images numériques qui forme une image de chaque paquet sérialisé dans le magasin 5 et qui à partir de cette image reconnaît automatiquement par OCR une indication de l'adresse de distribution ou livraison du paquet.

Les paquets sérialisés sont convoyés du magasin d'alimentation 5 jusqu'à un dispositif d'injection 13 où les paquets sont injectés un par un dans les godets de transport vides du convoyeur de tri (ici l'injection se faisant par un petit côté latéral du godet qui est redressé).

Une unité de contrôle/commande 9 de l'installation représentée sur la figure 1 agit, à partir des données d'adresse reconnues par le dispositif 7, sur les godets de transport du convoyeur de tri pour vider chaque godet contenant un paquet (ici en basculant le rebord 10 du godet comme illustré sur la figure 2) au-dessus d'un réceptacle 4 qui correspond à l'adresse de distribution du paquet dans un plan de tri maintenu en mémoire dans l'unité de contrôle/commande.

Lors du basculement du rebord 10 du godet qui est en position inclinée vers le bas, le paquet tombe par gravité dans le réceptacle correspondant situé juste dessous alors que le godet est en déplacement.

Les paquets sont convoyés en série du magasin 5 jusqu'au dispositif d'injection 11 ici par un convoyeur à plat 13 comme un convoyeur à tapis ou à rouleaux illustré sur les figures 1 et 3 qui comporte un système à rives de taquage pour mettre en alignement les paquets l'un derrière l'autre.

Dans l'exemple illustré sur la figure 1, le convoyeur 13 passe sous la boucle du convoyeur de tri et s'étend longitudinalement entre les deux brins parallèles opposés de la boucle du convoyeur de tri ce qui contribue à la compacité de l'installation de tri selon l'invention.

Les paquets sont injectés latéralement dans les godets de transport du convoyeur de tri depuis le côté intérieur de la boucle du convoyeur de tri par l'intermédiaire d'un dispositif d'injection comprenant des pousseurs à piston 11P qui sont illustrés sur la figure 3.

Ces pousseurs à piston 11P sont montés mobiles ici entre les lattes d'un convoyeur à lattes 8 pour être déplacés par l'effet d'un chemin de came disposé sous les lattes du convoyeur à lattes à la fois suivant la direction de déplacement D1 des godets et des lattes et transversalement à cette direction D1 ce qui a pour effet de réaliser un déplacement d'un paquet P pris en charge par un pousseur à piston 11P depuis le bord latéral extérieur du côté amont du convoyeur à lattes comme le paquet P′ vers le bord latéral intérieur du côté aval du convoyeur à lattes comme le paquet Pʺ à partir duquel le paquet est complètement injecté latéralement dans un godet de transport (redressé à l'horizontal) du convoyeur de tri qui est positionné ici de façon adjacente au pousseur à piston 11P.

Il est entendu que les pousseurs à piston avec les lattes sont synchronisés en déplacement suivant la direction D1 avec le déplacement des godets de transport du convoyeur de tri pour réaliser l'injection un à un des paquets depuis le convoyeur à lattes dans les godets.

Comme visible sur la figure 3, les godets de transport 3 qui circulent en boucle fermée au-dessus des sorties de tri en étant inclinés (godet indiqué par la référence 3' sur la figure 3), sont basculés en position horizontale (comme le plateau 3" illustré sur la figure 3) au moment de l'injection d'un paquet dans le godet et donc l'injection se fait par un glissement du paquet perpendiculairement au convoyeur de tri sous l'effet de la poussée du pousseur à piston.

On comprendra donc que pendant l'injection, le pousseur à piston 11P accompagne le paquet en étant en contact mécanique avec celui-ci et ce jusqu'à la fin de l'insertion du paquet dans le godet de transport de sorte que la position du paquet dans le godet de transport est déterminée exactement par la trajectoire du pousseur à piston dans la direction transversale à D1.

On a aussi illustré sur la figure 3 un réceptacle 4 en bout du dispositif d'injection 11 qui sert à récupérer les paquets P qui n'ont pas pu être injectés dans les godets de transport du convoyeur de tri.

Selon l'invention il est prévu un système de capteurs au-dessus des pousseurs à piston pour générer des données représentatives d'un contour du paquet P vu en plan entrant dans le convoyeur à lattes.

A partir de ces données de contour, l'unité 9 est agencée pour détecter un positionnement inadéquat du paquet P par rapport aux pousseurs à piston et en particulier par rapport au pousseur à piston 11 qui doit le prendre en charge, c'est-à-dire par exemple une position qui ne permet pas son injection dans un godet du fait d'un défaut d'alignement ou d'un défaut de centrage dans le pas séparant deux paquets consécutifs sur le convoyeur à lattes.

En particulier, il est prévu selon l'invention un système de capteurs comme des capteurs optoélectroniques formant un rideau vertical 12 de détection au-dessus du paquet P et qui est transversal au convoyeur à lattes et qui surplombe le bord amont du convoyeur à lattes comme illustré sur les figures 3 et 4.

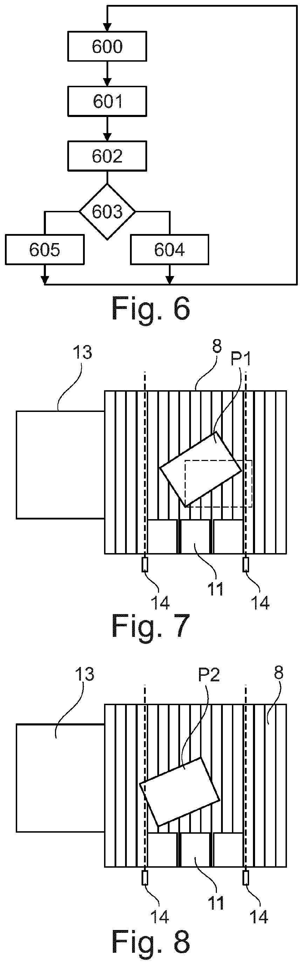

Le rideau de détection 12 est par exemple obtenu à partir d'une série de 25 capteurs optoélectroniques alignés sur 500 mm avec un espace inter capteurs de 20mm ce qui permet de réaliser une acquisition de données d'échantillonnage comme illustré par l'étape 600 sur la figure 6 pour des paquets du spectre visé par l'invention, ces données d'échantillonnage étant représentatives du contour du paquet vu en plan comme illustré sur la figure 5 avec une assez bonne précision.

A partir de ces données d'échantillonnage, l'unité 9 estime à l'étape 601 de la figure 6 le point instantané d'extrémité amont A du paquet, le point d'extrémité instantané aval C du paquet et le point instantané de pivot K du paquet.

A partir de ces points instantanés, l'unité 9 est apte par une extrapolation par rotation autour du point pivot estimé comme illustré à l'étape 602 de la figure 6, à calculer une position relative prévisible du paquet sous l'effet de son déplacement par un pousseur à piston et à partir de cette position relative prévisible calculée, à détecter à l'étape 603 illustrée sur la figure 6 si le paquet est dans un positionnement adéquate ou non adéquate pour son injection dans un godet.

Si l'unité 9 détecte que le paquet est dans une position adéquate, le processus d'injection du paquet se poursuit à l'étape 604, c'est-à-dire qu'un pousseur à piston 11 prend en charge le paquet comme le paquet P′ et l'amène par un double déplacement jusque dans la position d'injection dans un godet comme pour le paquet Pʺ.

Dans le cas contraire à l'étape 603 où l'unité 9 détecte que le paquet est dans une position inadéquate, le processus se poursuit à l'étape 605 par une mise au rebut du paquet, c'est-à-dire que le pousseur à piston 11 prend en charge le paquet mais le déplace globalement le long du bord latéral extérieur du convoyeur à lattes 8 pour l'amener jusqu'au réceptacle 4 qui se trouve sur le bord aval du convoyeur 8.

Sur la figure 5 on a désigné par Kmin ... Kmax des points du contour d'un paquet qui ont été identifiés par l'unité 9 comme les plus proches du pousseur à piston en charge du paquet et par Kest le point pivot de basculement du paquet qui est estimé par l'unité 9 à partir des points Kmin...Kmax.

Sur la figure 7, on a illustré une première situation où un paquet P se présente sur le convoyeur 8 dans une position relative non adéquate pour une injection dans un godet.

En plus on a illustré la présence de deux capteurs optoélectroniques horizontaux 14 disposés sur le bord latéral intérieur du convoyeur à lattes 8 et espacés entre eux d'une distance CH qui est légèrement plus grande que la longueur d'un pousseur pour pouvoir détecter par l'unité 9 si le paquet se trouve dans le pas de séparation entre paquets et dans la négative commander la mise en rejet du paquet dans le réceptacle 4

Sur la figure 7, la position relative extrapolée est illustrée pour le paquet P1 en traits pointillés, et on voit que celui-ci va déborder du pas défini entre les capteurs 14.

Sur la figure 8, la position relative extrapolée est illustrée en trait plein pour le paquet P2 et on voit qu'il déborde déjà du pas défini entre les capteurs 14.

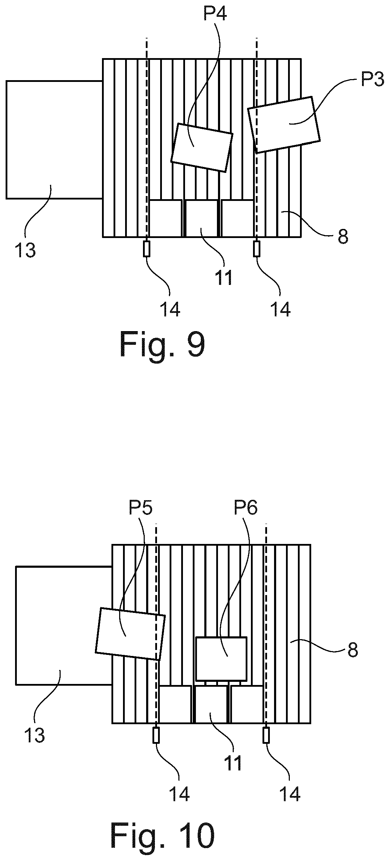

Sur la figure 9, la position relative extrapolée est illustrée en trait plein pour le paquet P3 et on voit qu'il est trop proche du paquet suivant P4 et donc il n'est pas à pas constant.

Sur la figure 10, la position relative extrapolée est illustrée en trait plein pour le paquet P5 et on voit qu'il est trop près du paquet précédent P6 et donc il n'est pas à pas constant.

Dans l'installation selon l'invention, il est prévu lors de la sérialisation des paquets en sortie de la trémie 6, des moyens pour aligner les paquets avec un pas constant.

Toutefois, la diversité des formes de paquets fait qu'il existe des situations où des paquets se présentent dans le dispositif d'injection 11 avec un défaut d'alignement ou un défaut d'écartement entre paquets.

Le système de capteurs selon l'invention contribue donc à réduire la tolérance de positionnement des paquets dans l'injecteur et à détecter ces paquets mal positionnés pour éviter un bourrage de l'injecteur ce qui permet d'optimiser la compacité des godets et donc de l'installation.

En particulier, avec un tel système de capteurs selon l'invention, il est possible d'injecter des paquets de 400mm de long et 300mm de large orienté en mode portrait dans des godets de 400mm de long et de 540 mm de large (transverse à D1) avec un pas de séparation entre paquets de 495mm et une largeur de pousseur à piston d'environ 370mm.

La vitesse de déplacement des plateaux peut être de l'ordre de 1,53m/s ce qui permet d'obtenir un débit de tri supérieur à 11000 paquets par heure.

Selon l'invention, le plan de tri qui est déroulé par l'unité de contrôle/commande 9 dans l'installation de tri 1 peut être un plan de tri multi-passes et ici en particulier un plan de tri en deux passes.

Selon ce plan de tri en deux passes, lors de la première passe de tri les paquets P sérialisés dans le magasin sont d'abord triés dans des premiers réceptacles à forte capacité de stockage en vrac, c'est-à-dire par exemple plusieurs centaines de paquets PPI.

Dans cette première passe de tri, les paquets P sont séparés par exemple en lots de tournées du facteur.

Un réceptacle à forte capacité de stockage en vrac est illustré sur la figure 1 par la référence 4A.

Un réceptacle 4A peut être par exemple un containeur.

A la fin de cette première passe de tri, les conteneurs remplis de paquets triés dans la première passe sont déplacés par des robots navette 12 en entrée d'alimentation de l'installation pour être de nouveau mis dans la trémie 5.

Ces robots navette sont pilotés par l'unité de contrôle/commande 9 pour se déplacer notamment d'une zone de rangement des robots navettes vers les sorties de tri de l'installation ou encore depuis les sorties de tri vers le magasin d'alimentation de l'installation ou encore vers une zone de stockage des réceptacles vides ou pleins.

Lors de la seconde passe de tri, les paquets P sont triés dans des seconds réceptacle de sortie de tri d'une capacité de stockage en vrac plus petite que celle des réceptacles 4A, par exemple quelques dizaines de paquets PPI.

Dans cette seconde passe de tri, les paquets P sont séparés par exemple par tournée du facteur.

Un réceptacle de faible capacité de stockage en vrac est illustré sur la figure 1 par la référence 4B.

Un réceptacle 4B peut être par exemple un bac ou un sac.

Les réceptacles 4A et 4B sont des réceptacles roulant ou montés sur chariots roulant. Les sacs sont portés par des chariots roulant sous forme de potence, le haut du sac étant maintenu ouvert en haut de la potence.

Après la seconde passe de tri, les réceptacles 4B remplis de paquets peuvent être regroupés par destination et par tranche horaire pour être transportés à l'aide des robots navette vers un dépôt de distribution.

La première passe de tri dans des réceptacles de forte capacité de stockage en vrac permet de simplifier le stockage et la réalimentation de l'installation tandis que la seconde passe de tri dans des réceptacles de plus faible capacité de stockage en vrac permet d'adapter ces seconds réceptacles au volume d'une tournée du facteur par exemple et qui pourront être regroupés dans des conteneurs plus grands pour être transportés en camion.

Dans cette installation 1 et comme illustré sur la figure 1, on peut affecter dans le plan de tri des premières sorties de tri à des premiers réceptacles 4A et des secondes sorties de tri à des seconds réceptacles 4B avec les premières sorties différentes des secondes sorties de façon à engager la seconde passe de tri avant la fin de la première passe de tri et accélérer ainsi le processus de tri.

Selon l'invention, le processus de tri des paquets peut comprendre plusieurs passes de tri successives dans des réceptacles 4A et plusieurs passes de tri dans des réceptacles 4B.

Dans l'installation 1 selon l'invention, plusieurs réceptacles (du type 4A ou 4B) roulants indiqués par les références 4′,4ʺ, 4‴ peuvent être disposés en file pour servir une même sortie de tri comme illustré sur la figure 2 et un système peut être prévu pour déplacer la file de réceptacles sous la sortie de tri au fur et à mesure du remplissage des réceptacles en file.

Ceci permet d'augmenter encore les capacités de tri de l'installation selon l'invention.

Avec l'installation de tri selon l'invention, on peut concevoir des sorties de tri mixtes aptes à recevoir des grands et des petits réceptacles 4A et 4B.

Le nombre de sorties de tri de l'installation dépend de la longueur de la boucle du convoyeur de tri et de la taille des réceptacles placés sous la boucle du convoyeur de tri.

Il est entendu que l'unité de contrôle/commande 9 maintient en mémoire la topographie des sorties de tri pour pouvoir réaliser le tri dans les réceptacles de sortie de tri.

Les lots de tournées en première passe sont constitués par exemple avec des expéditions complètes, c'est-à-dire des groupes de tournées devant être regroupés dans les mêmes conteneurs de transport.

Si on considère que l'installation peut séparer n lots en première passe de tri et que chaque lot est séparé en m tournées, le nombre total de tournées qui peuvent être séparées est donné par l'expression nxm.

Une installation selon l'invention à 64 sorties de tri mixtes permet de séparer environ 4000 tournées.

A noter que cette installation de tri selon l'invention peut supporter le tri de colis et paquets avec en plus des objets postaux plats de grands format.

Cette installation de tri est très adaptée pour être substituée à une installation de tri du courrier classique déjà en place dans un centre de tri postal par exemple.

L'architecture de l'installation de tri selon l'invention permet d'attendre des hauts débits de tri avec une grande compacité.

## Revendications

1. Installation pour le tri d'articles (P) comprenant un convoyeur de tri à carrousel (2) avec des godets de transport (3) des articles qui sont déplacés en boucle fermée suivant une certaine direction de déplacement(D1) au-dessus d'une pluralité de sorties de tri formées respectivement de réceptacles de stockage (4), un magasin d'alimentation (5) en articles dans lequel des articles stockés en vrac sont sérialisés puis injectés un par un dans les godets de transport du convoyeur en déplacement par un dispositif d'injection (11), une unité de contrôle/commande (9) qui agit sur le convoyeur de tri pour vider chaque godet contenant un article au-dessus d'un réceptacle qui correspond à une adresse de livraison de l'article suivant un plan de tri maintenu en mémoire dans l'unité de contrôle/commande, **caractérisée en ce que** le dispositif d'injection (11) comprend des pousseurs à piston (11P) montés mobiles sur un convoyeur à lattes (8) pour être déplacés à la fois suivant ladite certaine direction de déplacement (D1) et transversalement à ladite certaine direction de déplacement (D1) pour réaliser une injection latérale d'un article dans un godet, et **en ce qu'**il est prévu en outre un système de capteurs (12) au-dessus des pousseurs à piston pour générer des données représentatives d'un contour de l'article vu en plan, et **en ce que** l'unité de contrôle/commande (9) est agencée pour détecter à partir de ces données de contour un positionnement inadéquat de l'article par rapport aux pousseurs à piston et en réponse à cette détection commander le dispositif d'injection pour diriger l'article mal positionné vers un réceptacle de sortie en rejet disposé en aval du convoyeur à lattes (8).

2. Installation selon la revendication 1, **caractérisée en ce que** les capteurs sont des capteurs optoélectroniques formant un rideau vertical de détection.

3. Installation selon la revendication 1 ou 2, **caractérisée en ce que** l'unité de traitement de données détermine à partir des données de contour, un point instantané d'extrémité amont, un point instantané d'extrémité aval et un point instantané de pivot de l'article et à partir de ces points instantanés calcule par extrapolation une position relative prévisible de l'article sous l'effet de son déplacement par les pousseurs à piston et à partir de cette position relative prévisible calculée détecte si l'article est dans un positionnement inadéquat.

4. Installation selon l'une des revendications précédentes, **caractérisée en ce que** le système de capteurs comprend en outre des capteurs (14) disposés pour générer des données de contrôle de positionnement de l'article suivant ladite certaine direction de déplacement (D1) par rapport au pousseur à piston chargé d'injecter l'article dans un godet.

5. Installation selon l'une des revendications précédentes, **caractérisée en ce que** les godets du convoyeur de tri se présentent chacun avec un rebord escamotable (10) à l'arrière, et le dispositif d'injection est agencé pour injecter latéralement chaque article sur un côté latéral du godet.

6. Installation selon l'une quelconque des revendications précédentes, **caractérisée en ce que** le convoyeur de tri (2) est adapté pour trier des colis ou des paquets postaux.

## Patentansprüche

1. Sortieranlage für Artikel (P), umfassend einen Karussell-Sortierförderer (2) mit Förderbehältern (3) für die Artikel, die in einer geschlossenen Schleife in eine gewisse Verlagerungsrichtung (D1) über einer Vielzahl von Sortierausgängen verlagert werden, die jeweils von Ablagefächern (4), einem Zuführlager (5) von Artikeln, in dem lose gelagerte Artikel aneinandergereiht, dann einzeln in die Förderbehälter des Förderers bei Verlagerung durch eine Einführvorrichtung (11) eingeführt werden, einer Kontroll-/Steuereinheit (9), die auf den Sortierförderer einwirkt, um jedes Fach, das einen Artikel enthält, über einem Behälter zu entleeren, der einer Lieferadresse des Artikels gemäß einem Sortierplan, der in der Kontroll-/Steuereinheit gespeichert ist, entspricht, **dadurch gekennzeichnet, dass** die Einführvorrichtung (11) Vorschubkolben (11P) umfasst, die beweglich auf einem Lattenförderer (8) montiert sind, um sowohl in die gewisse Verlagerungsrichtung (D1) als auch quer zu der gewissen Verlagerungsrichtung (D1) verlagert zu werden, um ein seitliches Einführen eines Artikels in einen Behälter durchzuführen, und dass ferner ein System von Sensoren (12) über den Vorschubkolben vorgesehen ist, um repräsentative Daten für eine Kontur des Artikels in Sicht von oben zu erstellen, und dass die Kontroll-/Steuereinheit (9) dazu vorgesehen ist, auf Basis dieser Konturdaten eine nicht passende Positionierung des Artikels in Bezug zu den Vorschubkolben zu erfassen und als Antwort auf diese Erfassung die Einführvorrichtung derart zu steuern, dass sie den schlecht positionierten Artikel zu einem stromabwärts zum Lattenförderer (8) angeordneten Behälter für nicht akzeptierte Artikel leitet.

2. Anlage nach Anspruch 1, **dadurch gekennzeichnet, dass** die Sensoren optoelektronische Sensoren sind, die einen vertikalen Erfassungsvorhang bilden.

3. Anlage nach Anspruch 1 oder 2, **dadurch gekennzeichnet, dass** die Datenverarbeitungseinheit auf Basis der Konturdaten einen momentanen Punkt mit einem stromaufwärtigen Ende, einen momentanen Punkt mit einem stromabwärtigen Ende und einen momentanen Schwenkpunkt des Artikels bestimmt und auf Basis dieser momentanen Punkte durch Extrapolation eine vorhersehbare relative Position des Artikels unter der Wirkung seiner Verlagerung durch die Vorschubkolben berechnet und auf Basis dieser berechneten vorhersehbaren relativen Position erfasst, ob der Artikel in einer nicht passenden Positionierung ist.

4. Anlage nach einem der vorhergehenden Ansprüche, **dadurch gekennzeichnet, dass** das System von Sensoren ferner Sensoren (14) umfasst, die dazu vorgesehen sind, Positionierungskontrolldaten des Artikels entlang der gewissen Verlagerungsrichtung (D1) in Bezug zu dem Vorschubkolben, der den Artikel in den Behälter einführen soll, zu erstellen.

5. Anlage nach einem der vorhergehenden Ansprüche, **dadurch gekennzeichnet, dass** die Behälter des Sortierförderers jeweils mit einem hinten einziehbaren Rand (10) vorhanden sind, und dass die Einführvorrichtung dazu vorgesehen ist, jeden Artikel seitlich auf einer Seite des Behälters einzuführen.

6. Anlage nach einem der vorhergehenden Ansprüche, **dadurch gekennzeichnet, dass** der Sortierförderer (2) dazu vorgesehen ist, Postsendungen oder -pakete zu sortieren.

## Claims

1. An installation for sorting articles (P), the installation comprising a carrousel sorting conveyor (2) having transport bins (3) for transporting the articles that are moved around a closed loop in a certain movement direction (D1) over a plurality of sorting outlets formed by respective storage receptacles (4), an article feed magazine (5) in which articles stored loosely are put into series and then injected one-by-one into the transport bins of the conveyor as it is moving by an injection device (11), and a monitoring and control unit (9) that acts on the sorting conveyor to empty each bin containing an article over a receptacle that corresponds to a delivery address of the article following a sorting plan stored in a memory in the monitoring and control unit, said installation being **characterized in that** the injection device (11) comprises piston pushers (11P) mounted to move on a slat conveyor (8) to be moved both in said certain movement direction (D1) and transversely to said certain movement direction (D1) so as to inject an article laterally into a bin, and **in that** a system of sensors (12) is also provided over the piston pushers to generate data representative of an outline of the article seen in plan, and **in that** the monitoring and control unit (9) is arranged to detect inappropriate positioning of the article relative to the piston pushers on the basis of that outline data, and, in response to such detection, to cause the injection device to direct the improperly positioned article towards a reject outlet receptacle that is disposed downstream from the slat conveyor (8).

2. An installation according to claim 1, **characterized in that** the sensors are optoelectronic sensors forming a vertical detection curtain.

3. An installation according to claim 1 or claim 2, **characterized in that**, on the basis of the outline data, the data processing unit determines an upstream end instantaneous point, a downstream end instantaneous point, and a pivot instantaneous point of the article, and on the basis of said instantaneous points, computes, by extrapolation, a predictable relative positioning of the article under the effect of it being moved by the piston pushers, and, on the basis of the computed predictable relative positioning, detects whether the article is positioned inappropriately.

4. An installation according to any preceding claim, **characterized in that** the system of sensors further comprises sensors (14) disposed to generate monitoring data for monitoring the positioning of the article in said certain movement direction (D1) relative to the piston pusher in charge of injecting the article into a bin.

5. An installation according to any preceding claim, **characterized in that** each of the bins of the sorting conveyor has a retractable edge strip (10) at the rear, and the injection device is arranged to inject each article laterally over a lateral side of the bin.

6. An installation according to any preceding claim, **characterized in that** the sorting conveyor (2) is adapted for sorting postal parcels or packets.
